# EUROPEAN PATENT APPLICATION

(11) **EP 3 564 187 A2**
(43) Date of publication of application: **06.11.2019**
(21) Application number: 19386022.8
(22) Date of filing: 03.04.2019
(51) Int. Cl.: C01F 7/04, C22B 21/00, C23F 1/46

(54) **METHOD AND EQUIPMENT FOR THE RECYCLING OF ALKALINE WASTES FROM ALUMINUM EXTRUSION INDUSTRIES FOR THE PRODUCTION OF USEFUL COAGULANTS**

(30) Priority: 03.04.2018 GR 20180100149
(71) Applicant: Dailianis, Nikolaos, 42100 Trikala (GR)
(72) Inventor: Dailianis, Nikolaos, 42100 Trikala (GR)

(57) **Abstract**

A comprehensive recycling method, economically optimized, simple to implement and with the simplest equipment. The alkaline wastes produced by Aluminum extrusion industries (coming from the alkaline washing of Aluminum dies, alkaline surface treatment of Aluminum, etc.), produced in any concentration are collected and stored, as well as the Alumina containing sludge (in the form of Aluminum hydroxide) that was formed at various stages of collection and processing as, also, the resulting Alumina sludge coming from Alumina- Soda recovery plants. Then, the solutions, in decreasing order of preference I) are mixed to appropriate concentrations of Al and NaOH, II) are reacted in open (atmospheric pressure) heated tanks with calculated amounts of Alumina sludge, III) are reacted in open (atmospheric pressure) tanks with calculated amounts of Aluminum metal scrap, of the same or other plants, and turns after clarification, filtration and packaging, in to all possible concentrations of sodium aluminate solution products for use as a suitable alkaline coagulant for acidic and hypo-acidic waste waters and as a concrete coagulation accelerator. The method is economically optimized and does not produce byproducts or wastes.

## Description

### INTRODUCTION - LEVEL OF THE TECHNIQUE

The aluminum extrusion and anodization industry produces a large volume of hazardous alkaline waste in various concentrations and forms. A stream of strongly alkaline waste from the process of cleaning the extrusion dies in a strong solution of caustic soda. This stream contains a caustic soda concentration of 15-25% w/w and a concentration in dissolved Aluminum in the form of trivalent ions of 3% to 9% w/w. At the same time from the anodizing baths, with respect to the alkaline corrosion of the Aluminum surface, a similar solution with lower concentrations is also produced. Both solutions contain or almost always result in insoluble alumina (Aluminum Tri-hydroxide) which precipitates in the waste water collecting and processing tanks.

Within the various methods proposed for the management- exploitation by recycling of these wastes we can find:
- A Soda Recovery Method (and Reuse) and an Alumina Recovery Method [Craig J. Brown, Plating & Surface Finishing, 1982, and P. Tansens, et al., Journal of Hazardous Materials, 2011]
- A method of using alkaline solutions for the production of zeolites [Dufour J, et al., 2001]
- A method of neutralization and utilization of alumina sludge for the production of Hydrotalcite, Downsonite or ceramic products [Alvarez-Ayuso and Nugteren, 2004, 2005]
- A method of recycling alkaline waste using the same washing equipment of Aluminum dies that simultaneously achieves savings in caustic soda for the production of coagulants in the form of sodium aluminate [N. Ntailianis, GR 20090100427, 2009]

The management of this waste with the use of the last patent pre-mentioned above, in the last 4 years has shown the presence of a basic problem. This is that Aluminum Extrusion Factories encounter difficulties in accurately applying the proposed method (GR 20090100427). There are many cases where - for various reasons (technical- functional reasons or time saving reasons) - dilute solutions are produced in terms of Soda or Aluminum or both. Additionally in the same area (e.g. Greek area and/or Balkan area) some factories may implement the first pre-mentioned method for soda and alumina recovery that produces quantities of Alumina that are difficult to exploit.

Another fact is that in storage tanks, transport and handling tanks of these solutions, the formation of hard or soft alumina sludge (in the form of Aluminum Tri-hydroxide precipitate) is quite often observed and it is a problem to separate and further exploit the sediment and the supernatant solution.

Solution to these two problems is given with the present patent which is a comprehensive and economically optimized proposal for all cases of alkaline waste arising from Aluminum extrusion and anodization industries.

In the present patent, what is proposed is to collect all alkaline waste as produced, whether a method of soda saving and waste condensation (GR 20090100427) is used from the factories or not. Either the resulting solutions are dense or dilute. Not only the liquids but also the solid alumina residues formed in the various processes mentioned above are collected. Also, the alumina resulting from extrusion industries and/or anodizing industries that follow a process of soda and alumina recovery, is collected. All the above are driven for the production of various densities in Al and NaOH solutions of commercial sodium aluminate concentration or more dilute, depending on the type of customer and final use requirements. There is also, the possibility of producing aluminum sulfate solutions and PAS (poly Aluminum Sulfate) from the alumina or reclaimed alumina sediments, when collected in amounts exceeding the available quantities of alkaline waste liquids.

The innovation of this process lies in the possibility that introduces concerning the recycling (in a very economical way and with zero byproduct and waste streams during the application) of liquid (dilute and concentrated solutions) alkaline waste streams as well as solid wastes containing alumina (sediments, recycled alumina, etc.) from all the extrusion factories and the production of useful products using a simple method as well as a simple production equipment. The present method avoids- although it can use the use of evaporation-concentration methods of the solutions (energy-wasting), the use of soda neutralization methods and its recovery, as well as alumina using complicated methods and equipment which produces large volumes of by-products requiring further care for processing or disposal. It does not generate waste streams. It utilizes all type and density alkaline streams from the extrusion units - alkaline washing of the extrusion dies cleaning and waste streams from alkaline anodization baths and the formed precipitates of Aluminum tri-hydroxide deriving in the storage tanks etc. Also, Aluminum tri-hydroxide produced by plants using a recovery method of Soda/Alumina can be used and recycled by this method. It can also produce all desired concentrations meeting the market required concentrations of products of Sodium Aluminate solutions. The sodium aluminate solutions, find a prime application as alkaline flocculent in sewage treatment of acidic and hypo-acidic waste waters and especially in Dairies, tanneries, seed oil factories, metal treatment and galvanization factories, etc., as well as a setting accelerator and anti -rebound agent of the concrete.

### DETAILED DESCRIPTION OF THE METHOD AND THE RECYCLING EQUIPMENT

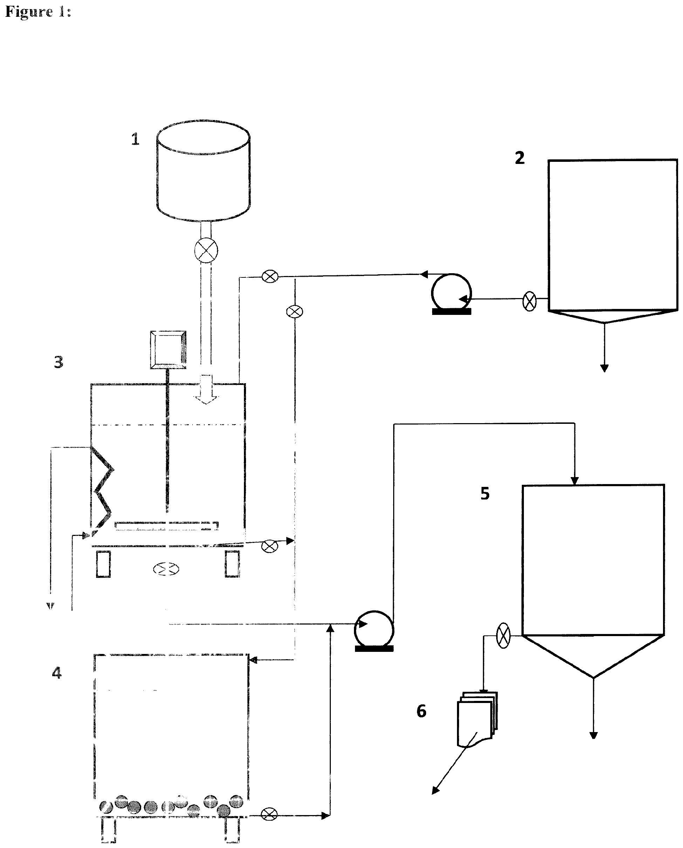

The alkaline waste of any concentration are collected and stored in the tank (2) of dilute alkaline waste (figure 1). The sludge of Aluminum hydroxide which has been formed at the various stages of the process (production, collection, transport, storage) as well as the one derived from plants of recovering Soda- Alumina are stored in the Alumina sludge tank (1), (figure 1)

Depending on the density of diluted waste solutions, the availability of waste alumina sludge and the density of the products we want to produce, we select one of the following three processes or a combination of two or/and all three in order of preference from 1 to 3.

### Procedure 1:

### Mixing of recovered alkaline waste solutions

In the first case- process, we make appropriate mixes of solutions taken from the various aluminum industries to achieve the product target in Al and NaOH. This technique usually works to produce relatively dilute solutions that match the recipient customers, near product transport distances, and wherein the ratio of Al to NaOH can be achieved by suitable blends of the alkaline waste streams. The first one (Al concentration) refers to flocculation capacity and the second one (NaOH concentration) to the acidity neutralization and acidic pH correction capacity.

### Procedure 2:

### Embedding alumina sludge and enrichment of alkaline waste solutions in alumina

In this procedure, we add to a suitable amount of the dilute solution (in Al and NaOH, which can be derived also from the procedure 1), calculated amount of Alumina sludge (existing in the form of Aluminum tri-hydroxide) that we have collected from various Aluminum extrusion industries, for recycling. If it is required we add a pre-calculated small amount of NaOH (50% solution). The mixture is heated under stirring in insulated tank- reactor (3, figure 1) at its boiling point (from 105-110 °C, depending on the solution concentration) for 2 hr, and then, without heating, keeping the high temperature, we continue stirring for another 4 - 8 hr. Then the solution is driven into a sedimentation tank (5, figure 1) where the insoluble matter (mainly iron oxides and other metal oxides) are removed after precipitation. The clear solution is hot filtered on the filter (6, figure 1) and stored in a tank of finished product. With this technique, solutions of almost any concentration and ratio in Al/NaOH are produced, suitable for most receiving customers, with a concentration of Al up to 10% and in NaOH up to 25 %.

The incorporation of the Alumina sludge to free caustic Soda of the solutions is almost quantitative under these conditions and if we use excess sludge (for reaction speed reasons) then this is left to precipitate in the tank- reactor (1, figure 1) for ½ - 1 hour and remain available for the next production cycle. The incorporation reaction of the alumina sludge into the free caustic soda of the solution is given by the following reaction:

NaOH + Al(OH)₃ → Na . Al (OH)_{4(aq)} (sodium aluminate)

### Procedure 3:

### Aluminum integration and enrichment in Aluminum by Aluminum scrap erosion in warm baths of alkaline waste solutions

In the third procedure, when dense or very dense solutions are required (Al to 12.5% and NaOH to 25%) and there is no available dense original waste solution in Al and/or NaOH, or the necessary amounts of aluminum tri-hydroxide sludge or the technique of procedure 2 is not sufficient to achieve the target density of the product, a selected amount of solution (either as collected from the Factories or as a result of mixing wastes of various concentrations - procedure 1, or as produced by the method described above in procedure 2, is driven to open tank- reactor (4, figure 1) where quantities of Metal Aluminum scrap are put (usually residues produced by extrusion presses or Aluminum pieces detached from the extrusion dies of the same Aluminum extrusion industries). If it is required, small and pre-calculated amount of NaOH (50% solution) is added to the reactor. Corrosion of Aluminum and its incorporation in the solution takes place rapidly and quantitatively, the process is highly exothermic (usually cooling may be required to, 5 °C, below solution's boiling point). For reasons of initial reaction speed and in order to avoid Aluminum tri-hydroxide precipitation during the dissolution of Aluminum in the free caustic soda (NaOH), the solution can be initially heated at 70-80 °C. At the same time, what is produced and continuously removed from the process is H₂ gas, which can be burned or used for power generation in Hydrogen cells. The incorporation reaction of Al in the free caustic soda takes place in all the amount of the corroded Aluminum. We usually use an excess of Aluminum for speedy completion of the reaction. The corrosion- dissolution reaction is as follows:

2 Al° + 2 NaOH + 6 H₂O → 2 Al. Na.(OH)₄ + 3 H_{2(g)}

Then, the solution is driven into a sedimentation tank (5, figure 1) where the insoluble phase (mainly iron oxides and other metal oxides) are removed after precipitation). The clear solution is filtered under high temperature in the filter (6, figure 1) and stored in a finished product tank.

### Procedure 4:

### Aluminum sulfate solution production (up to 4% Al) by the addition of the possible excess of Aluminum sludge containing Aluminum tri-hydroxide in hot sulfuric acid solution

Finally, as a farther possibility, a fourth process can be proposed, when there is a high availability of alumina sludge or recovered alumina, combined with low availability of alkaline waste solutions (rare case). Then, a solution of Aluminum Sulfate (up to 4% in Al) can be produced for use as coagulant in biological treatment plants, by adding- treating an appropriate amount of sulfuric acid solution in the alumina sludge (and/or Aluminum scrap). The reaction may be performed in open (atmospheric), polyesteric (or other anti-acid material), stirred and heated tank, at 80-110 °C, reaction time 4-16 hr and then precipitation of the possible excess of alumina (which can be used) and final filtering of the product solution can complete the process. Also, the product solution of aluminum sulfate (up to 4% in Al) can be used to produce, by a known technique [e.g.: CN101279756], under reaction of Aluminum Sulfate with concentrated sodium aluminate, flocculants such as PAS (Poly-Aluminum Sulfate, up to 5,5% Al).

Also, in this fourth case-proposal, always combined with the three mentioned above ones, there is no separation of streams, no creation of byproducts or waste streams, no energy-intensive condensation by evaporation and no specialized, complicated and expensive equipment.

The following Table 1, is given as a general example of a spreadsheet that may calculate the final concentrations of the product solution of sodium aluminate in any of the cases 1,2,3 procedures or any combination of these procedures-cases, with an error +/-5%. The target is to obtain a product at the desired (from the customers) concentration in Al and NaOH, in the best technical way (availability of various concentrations of waste solutions, Aluminum tri-hydroxide sludge and Aluminum scrap) and economical way (in descending order of preference for the economics of the method: Procedure 1 → Procedure 2 → Procedure 3).

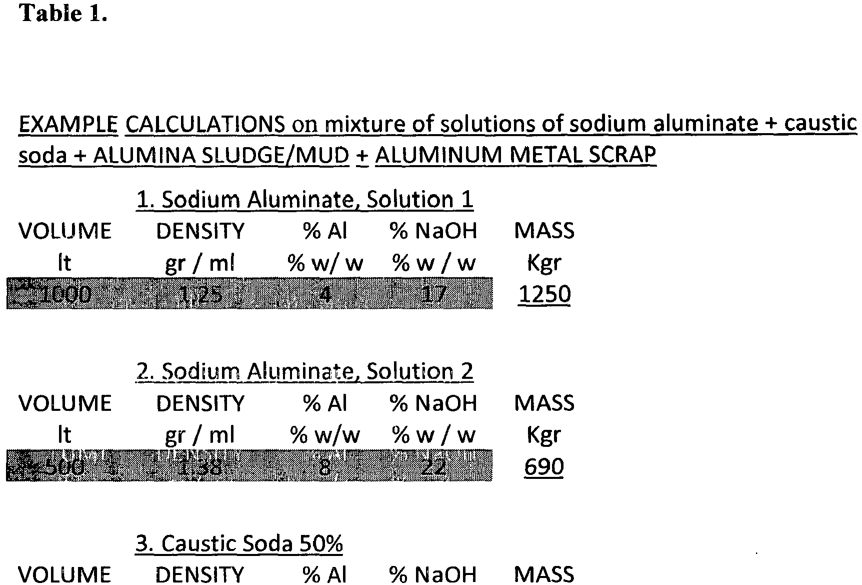

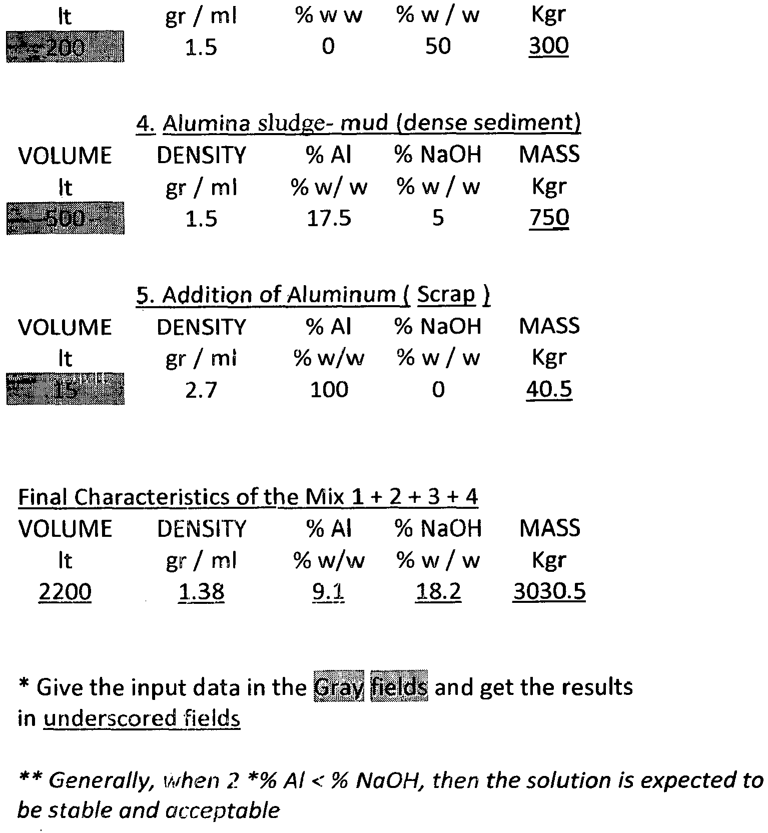

### EXAMPLES OF THE APPLICATION OF THE METHOD

### Example 1.

Two dilute alkaline waste solutions are available from two Aluminum Extrusion Industries, containing: Factory 1 - solution 1: 20% w/w NaOH and 5% w/w in Al. Factory 2 - Solution 2: 25% w/w NaOH and 3.8% w/w in Al as well as Alumina Mud from a third Aluminum Extrusion Plant, Factory 3 - Alumina Mud: 5% w/w in NaOH and 17.5% w/w in Al (in the form of Al(OH)₃, 50% w/w). In the reactor 3 of Figure 1, we add 2000 liters of the solution 1, 2000 It of the solution 2 and 1000 liters Alumina sludge from plant 3. The mixture is heated with stirring to its boiling point (108 °C) and then the heating stops and left under stirring for 8 hours. The temperature drops to 90 °C. The final mixture is left for 4 hr in precipitation and the supernatant clear product is filtered and packaged. The characteristics of the product is: 6752 Kg, % Al w/w: 7.3, % NaOH w/w: 18.6, density = 1.35 g/ml. The product was used as an alkaline coagulant in a dairy industry waste water. Waste water pH was 5.3, in 500 ppm doses, leaving at DAF 100 % of the acidity and over 90% of the load of protein and fats of the waste water.

### CALCULATIONS OF EXAMPLE 1.

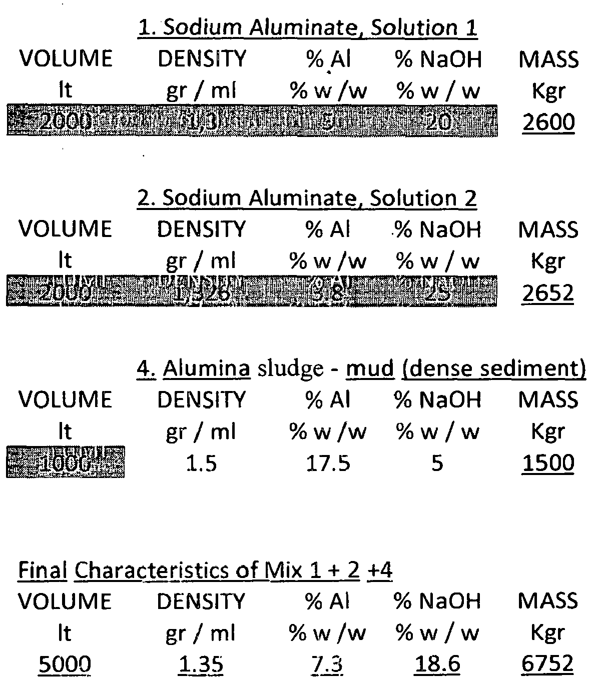

### Example 2.

Two dilute alkaline waste solutions are available from two Aluminum Extrusion Industries, containing: Factory 1 - solution 1: 20% w/w NaOH and 4% w/w Al. Factory 2 - Solution 2: 18% w/w NaOH and 7% w/w Al as well as Alumina Mud from a third Aluminum Extrusion Plant, Factory 3 - Alumina Mud: 5% w/w in NaOH and 17.5% w/w in Al (in the form of Al(OH)₃, 50.5 % w/w). In the reactor 3 of Figure 1, we add 1000 liters of the solution 1, 3000 It of the solution 2 and 800 It Alumina sludge from plant 3. The mixture is heated with stirring to its boiling point (109 °C) and then the heating stops and left under stirring for 8 hours. The temperature drops to 90 °C. The final mixture is left for 4 hr in precipitation and the supernatant clear product is filtered and packaged. The characteristics of the product is: 6440 Kg, % Al w/w: 8.4, % NaOH w/w: 16, density = 1.34 gr/ml. The product was used as an alkaline coagulant in a dairy factory waste water, waste water pH was 5.6 at doses of 400 ppm, removing in the DAF 100% of acidity and over 90% of the load of protein and fats of the waste water.

### CALCULATIONS OF EXAMPLE 2.

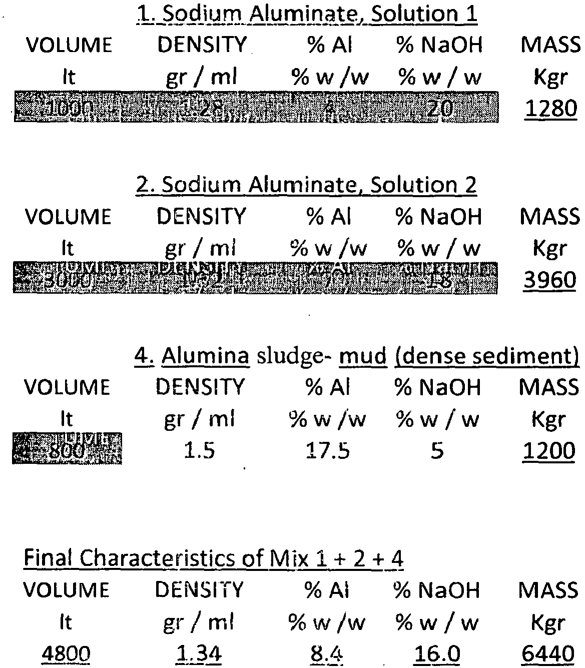

### Example 3.

Two dilute alkaline waste solutions are available from two Aluminum Extrusion Industries, containing: Factory 1 - solution 1: 20% w/w NaOH and 4% w/w Al. Factory 2 - Solution 2: 18% w/w NaOH and 7% w/w Al as well as Alumina sludge from a third Aluminum Extrusion Plant, Factory 3 -Alumina sludge: 5% w/w NaOH and 17.5% w/w Al (in the form of Al(OH)₃, 50.5 % w/w) . In the reactor 3 of figure 1, we add 1000 It of the solution 1, 3000 It of the solution 2, 500 It of a commercial solution of NaOH 50% w/w and 800 It of Alumina sludge from the factory 3. The mixture is heated with stirring to its boiling point (109 °C) and then the heating is stopped and left under stirring for 8 hours. The temperature drops to 90 °C. The final mixture is left for 4 hr in sedimentation and the supernatant clear product is driven in the reactor 4 of Figure 1, wherein there is an excess of metal scrap Aluminum (150 It). The mixture is left to react for 1 hr, at boiling temperature (110 °C), dissolving 70 liters of Aluminum. The solution is led to the final settling tank 5 of Figure 1, where it is clarified (in its high temperature) for 4 hr. It is then pumped, filtered and packaged. Product characteristics are 7379 Kg, % Al w/w: 9.9, % NaOH w/w: 19, density 1.39 gr/ml . The product was used as alkaline coagulant in waste water of a tanneries factory with a waste water pH= 5.0, at doses 700 ppm, removing in the DAF 100% of the acidity and over 90% of proteins and fats of the waste water.

### CALCULATIONS OF EXAMPLE 3.

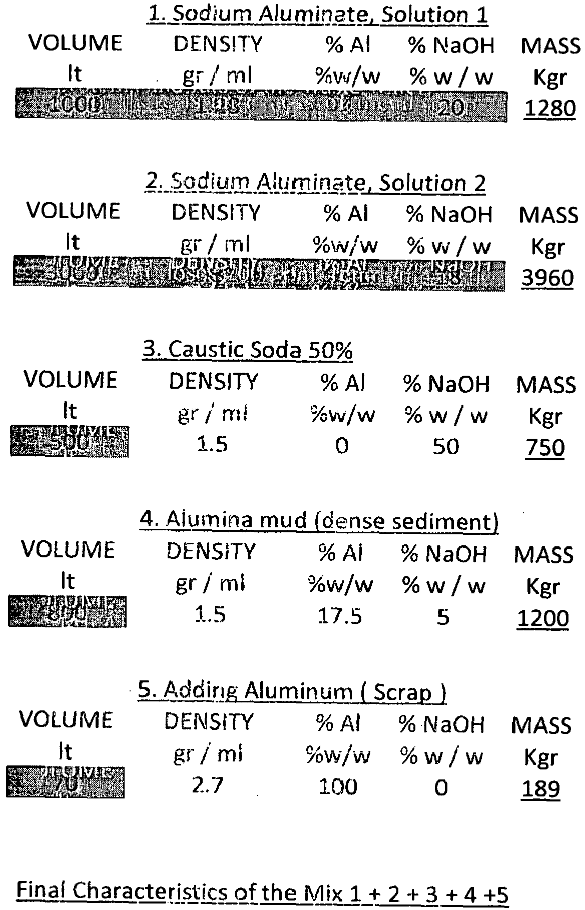

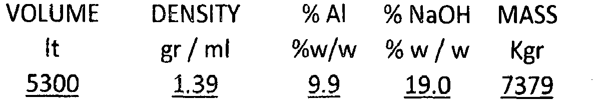

### Example 4.

There was available the following dilute alkaline waste solutions of Aluminum extrusion industries: Factory1, Solution1: 25 % w/w in NaOH and 6 % w/w in Al, also, was available Alumina sludge from a second Aluminum extrusion factory, having the following characteristics: Alumina sludge: 5% w/w in NaOH and 17.5% w/w in Al (in the form of Al (OH)₃, 50.5 % w/w). 3000 It of the solution 1, a commercial solution of NaOH 50% w/w and 1000 It of Alumina sludge from the factory 2 are driven into the reactor 3 of figure 1. The mixture is heated with stirring to its boiling point (110 °C) and then the heating is stopped and the mixture is left in continuous stirring for 8 hours. The temperature drops at 90 °C. The final mixture is left 4 hr in sedimentation and the supernatant clear product is driven into the reactor 4 of Figure 1, wherein there is an excess of Aluminum scrap (200 It). We leave the mixture to react for 2 hr, at boiling temperature (112 °C) dissolving 140 It of the Aluminum. The solution is led to the final settling tank 5 of Figure 1, where it is clarified (under its high temperature) for 8 hr. It is then pumped, filtered and packaged. The product characteristics are: 7188 Kg, % Al w/w: 12.3, % NaOH w/w: 23.7, density=1.50 gr/ml. The product was successfully used as a coagulation accelerator and anti- rebound agent of concrete.

### CALCULATIONS OF EXAMPLE 4.

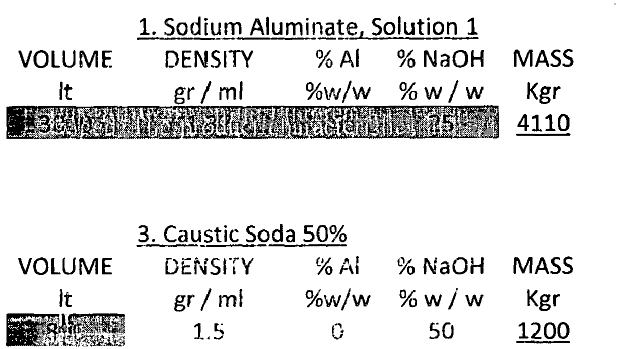

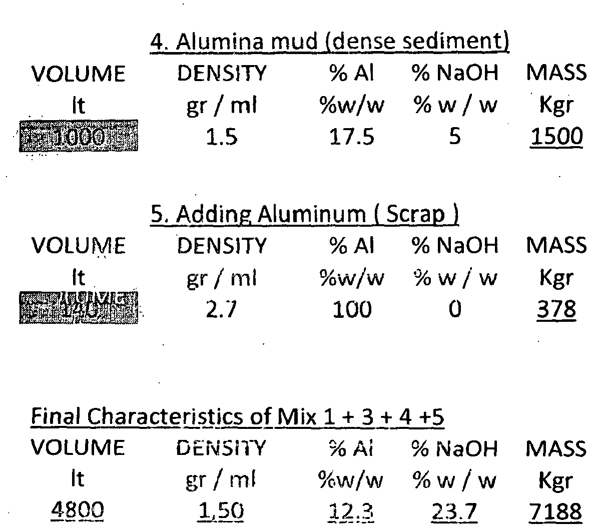

## Claims

1. A total, without separation of the streams and without by-products or waste production, recycling method of the dilute and dense alkaline baths of anodizing and Aluminum dies washing baths of the Aluminum extrusion Industries, as well as alumina sludge sediments (produced by the same or similar industries) according to which what is produced is sodium aluminate solutions of various, requested by the market of coagulants, concentrations (Al: from 3% to 12.8 %w/w, NaOH: from 12% to 25 % w/w). According to this recycling method the waste streams are collected and - in descending order of preference- 1) are mixed to give suitable- desired solution concentrations of Al and NaOH or/and 2) heated under stirring in open reactors, at 80- 112 °C, 1- 8 hr, with appropriate amounts of Alumina sludge waste streams incorporated quantitatively or partly in the alkaline solutions or/and 3) corrode quantitative or partly, additional Aluminum metal scrap, if necessary (at 80- 115 °C, 1-3 hr) so as to obtain -after precipitation of insoluble matter and filtering- the desired from end-users concentration of the product solution of sodium aluminate coagulant of various concentrations.

2. The product solutions of various concentrations of Sodium Aluminate, obtained by applying the recycle method as described in claim 1, with an Al concentration of 2-12.5% w/w and preferably from 4% to 9% w/w and concentration in NaOH from 8-35% w/w and preferably from 15% to 25% w/w.

3. The use of sodium aluminate solution as described in claim 2, produced by the recycling method as described in claim 1, particularly as alkaline coagulants in acidic and slightly acidic dairy waste water, tanneries waste water, Seed Oil refineries waste water, Metal-working and galvanization factories waste water, etc., as well as a coagulating accelerator and "anti - rebound agent" of the concrete or in other known uses thereof.

4. The above recycling method, as described in claim 1, for the production of solutions of sodium aluminate with concentration described in claim 2 and with uses described in claim 3, with the adoption of another , well known technological equipment, to carry out the relevant reactions, such as the reactions in closed pressure CSTR or tubular (PFR) reactors, of batch, semi-continuous or continuous operation for the achievement of higher temperatures, up to 300 °C, and hence reduction of the reaction time, compared with the ordinary open (atmospheric) reactors proposed in claim 1.

5. The above method, with the additional possibility at any stage to concentrate the solutions at higher concentrations by evaporating a portion of the water they contain or to treat- condensate them by using a known semipermeable membrane process.

6. The above method when the precipitated Alumina sludge is coming from Aluminum processing units which implement a Soda/Alumina recovery method or the Alumina supplied by another known source.

7. The above method when Metal Aluminum comes from scrap produced by the same extrusion companies or from another known source.

8. The above method of recycling when sodium aluminate solution products are used as intermediate products in another well-known technology process to produce PAC , PACS, PAS, etc., in conjunction with raw materials as aluminum chloride or aluminum sulfate, etc.

9. The above recycling process as described in claim 1 wherein when there is eventually large availability of alumina sludge or recovered alumina in combination with low availability of alkaline waste solution then the necessary additional caustic Soda is added to the liquid alkaline wastes, keeping the logic of the process as set in the above claim 1.
